# EUROPEAN PATENT APPLICATION

(11) **EP 1 127 491 A1**
(43) Date of publication of application: **29.08.2001**
(21) Application number: 00500030.2
(22) Date of filing: 28.02.2000
(51) Int. Cl.: A22C 11/02, A22C 13/02

(54) **Flexible intermediary element for the food industry**

(71) Applicant: Levantina Barea S.L., 46190 Riba Roja del Turia (ES)
(72) Inventor: Barea Esteve, Jose Maria, 46190 Riba Roja del Turia (ES)
(74) Representative: Marques Alos, Fernando

(57) **Abstract**

Flexible intermediary element for the food industry of the kind used mainly in the external covering of delicatessen or other meat compositions, characterised essentially as being made up of a long rectangular plastic lamina folded along its length (1), presenting close to one of its ends and in a central position a rhomboidal gripping hole (2), and optionally the lamina being provided with both bevelled cuts (3) on its other end.

## Description

The object of this invention as expressed in this descriptive report consists of a **"FLEXIBLE INTERMEDIARY ELEMENT FOR THE FOOD INDUSTRY"** of the kind used mainly in the external covering of delicatessen and other meat compositions.

Traditionally animal tripe has been used for stuffed meats, and mainly that of pig or lamb.

To carry out meat stuffing, the animal tripe, previously soaked in saline solution, is introduced in the injector head of the stuffing machine and filling is carried out.

This operation of introducing the tripe in the stuffing head is laborious and at the end of the day much time was lost in handling the tripe and moving it to the injector, and the machine had to be stopped to fit the tripe

For all of this, it was decided to insert the tripe beforehand in a stiff tube in order to speed up the fitting thereof in the injection head and to make the stuffing process shorter.

Basically, the system consists of a stiff tubular element, on the outside of which the metres of animal tripe are fitted in a wrinkled manner along the whole of the external surface.

This operation will then make it easier to introduce the tripe in the head of the stuffing machine and for this operation the tube must be fitted to the head and the tripe run-down towards it.

With all of this, we managed to reduce the time needed to fit tripe to the injector head of the stuffing machine.

Another mechanism for fitting tripe to the injector consists of a flexible tube closed at one end and open at the other.

Inside the tube there is a flexible lamina, but with a certain degree of rigidity, which makes it easier to fit the unit to the injector head.

The extraction of the flexible tube is carried out at the rear once the tripe has been inserted.

One of the main problems of both auxiliary tubes used in stuffing lies in the cost thereof and the space they occupy.

Likewise, although the flexible tube reduces the processing time, the time needed for stuffing is still considerable.

Similarly, when the closed flexible tube is withdrawn the tripe is superimposed, which also causes a slower stuffing speed.

Another important factor in stuffing is the dampening of the tripe so that it will withdraw easily from the head as the stuffing process continues and not become stuck to the machine.

Both systems complicated the humidifying as they have a closed cross section.

Finally, in the stocks of tubes with tripe prepared for inserting in the stuffing head, the ends of the tripe come off the tubes, which slows the stuffing process as they have to be refitted before stuffing can take place.

For all of these reasons, we have developed a new invention to solve the above mentioned problem.

Basically, the new flexible intermediary element for the food industry consists of a rectangular plastic lamina folded along its length with a rhomboidal gripping hole close to one of the ends and in the centre, which makes it easier to remove the intermediary element once the tripe has been inserted.

Optionally, the lamina may be provided with two bevelled cuts at one end to facilitate the insertion of the tripe.

Essentially, the new flexible intermediary element for the food industry works as follows:

Initially, the tripe is fitted by surrounding the flexible lamina and once in place, the bevelled end is passed through the gripping hole, closing the unit with the tripe inside for transporting this stock to the stuffing machine.

Once in the stuffing machine, the end of the intermediary element is fitted to the head by the gripping hole area and all the metres of tripe are passed to the injector head of the stuffing machine.

Once past, the intermediary element is removed from the rear of the head using the gripping hole and leaving the tripe ready for stuffing.

The main advantage of the new flexible intermediary element lies in the reduced handling time with respect to the flexible tubes used until now, both in terms of packing, as the product may be packed in mesh, tubs or drums, and in terms of transport within and outside the production installations.

Storage space and wastage is also reduced as the element may be stored completely flat and once used, the waste is far less than with previous auxiliary tubes.

The new flexible intermediary element requires less preparation when stuffing as the longitudinal cut enhances tripe dampening.

In comparison with the closed flexible tube, the tripe is not superimposed, which makes its use due to excess time and material loss almost unfeasible.

Unlike the previous systems, the intermediary element is removed from the back of the stuffing head, and the system is much faster.

Likewise, the time used from reception to consumption by the meat factory is reduced by a large percentage, making previous systems obsolete.

### DESCRIPTION OF THE DRAWINGS

In order to illustrate what we have described above, this descriptive report is accompanied, as an integral part thereof, by a sheet of drawings showing in a simplified, schematic manner, an example of production, which is only illustrative and not restrictive of the practical possibilities of the invention.

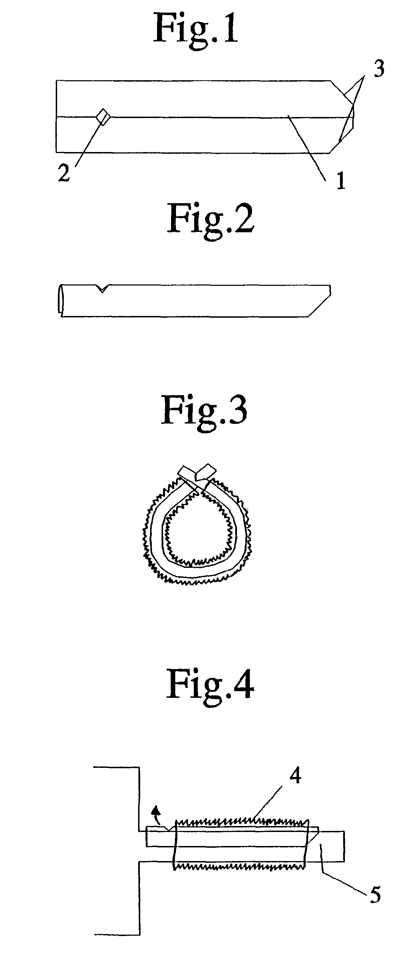

In the said drawings: Figure 1 corresponds to an open view of the new flexible intermediary element for the food industry.

Figure 2 is a view of the new flexible intermediary element for the food industry as it is fitted to the head.

Figure 3 corresponds to a view of the way the intermediary element is stored with the tripe in a circle, until it is introduced in the stuffing head.

Figure 4 corresponds to a view of the introduction of the tripe in the stuffing head and the place where the intermediary element comes out.

### DESCRIPTION OF A PRACTICAL CASE

The new flexible intermediary element for the food industry is made up of a rectangular plastic lamina folded along its length (1), with a rhomboidal gripping hole close to one of its ends (2) to make it easier to extract the element.

Optionally, the lamina might have both bevelled cuts (3) at one of its ends.

In essence, the new flexible intermediary element for the food industry works as follows:

Initially, the tripe (4) is placed surrounding the flexible intermediary element, inserting the bevelled end (3) in the gripping hole (2).

When the tripe (4) has to be fitted to the head for stuffing (5), the flexible intermediary element is unrolled and placed in the stuffing machine, with all the metres of tripe passing to the head (5) of the stuffing machine.

Once past, the intermediary element is removed from the rear or the base of the head (5), leaving the tripe ready for stuffing.

Having established the expressed concept, there follows the note of claims bringing together the novelties that we wish to claim:

## Claims

1. **"FLEXIBLE INTERMEDIARY ELEMENT FOR THE FOOD INDUSTRY"** of the kind used mainly in the external covering of delicatessen or other meat compositions, characterised essentially as being made up of a long rectangular plastic lamina folded along its length, presenting close to one of its ends and in a central position a rhomboidal gripping hole.

2. **"FLEXIBLE INTERMEDIARY ELEMENT FOR THE FOOD** INDUSTRY", according to the above claim, characterised by the lamina optionally being provided with both bevelled cuts at one of its ends.

3. **"FLEXIBLE INTERMEDIARY ELEMENT FOR THE FOOD INDUSTRY"** , according to the above claims, characterised because initially all the metres of tripe, of variable length, are fitted surrounding the intermediary element like a sleeve.

4. **"FLEXIBLE INTERMEDIARY ELEMENT FOR THE FOOD INDUSTRY"** according to the above claims, characterised because the rhomboidal gripping hole serves to allow the passage of the bevelled end of the intermediary element for tying the animal tripe and preventing its release.

5. **"FLEXIBLE INTERMEDIARY ELEMENT FOR THE FOOD INDUSTRY"** according the above claims, characterised because at the time of stuffing, the flexible element is fitted to the stuffing machine by the end with the gripping hole, allowing all the metres of tripe to pass to the injector head of the stuffing machine, and once past, the intermediary element is removed at the base of the head by means of its gripping hole, leaving the tripe ready for stuffing.
